Europäisches Patentamt

European Patent Office

Office européen des brevets

(11) Veröffentlichungsnummer: **0 197 431 B1**

# EUROPÄISCHE PATENTSCHRIFT

(45) Veröffentlichungstag der Patentschrift: **29.07.92**

(51) Int. Cl.⁵: **B29C 45/76**

(21) Anmeldenummer: **86104137.4**

(22) Anmeldetag: **25.03.86**

(54) **Verfahren zum geregelten Spritzgiessen auf unterschiedlichen Kunststoff-Spritzgiessmaschinen mit stets gleichen Formteileigenschaften und gleichen Massen.**

(30) Priorität: **11.04.85 DE 3513001**
 **06.07.85 DE 3524310**

(43) Veröffentlichungstag der Anmeldung:
 **15.10.86 Patentblatt 86/42**

(45) Bekanntmachung des Hinweises auf die
 Patenterteilung:
 **29.07.92 Patentblatt 92/31**

(84) Benannte Vertragsstaaten:
 **AT CH FR GB IT LI**

(56) Entgegenhaltungen:
 DE-A- 2 030 108
 DE-A- 2 358 911
 FR-A- 2 158 182
 FR-A- 2 380 865

 JAPAN PLASTICS AGE, Band 23, Nr. 201,
 Januar-Februar 1985, Seiten 35-41, Tokyo, JP;
 H. BANZAI: "High performance process controller. New injectvisor for injection molding
 machine"

(73) Patentinhaber: **Battenfeld GmbH**
 **Scherl 10**
 **W-5882 Meinerzhagen(DE)**

(72) Erfinder: **Woebcken, Wilbrand, Prof. Dr.-Ing.**
 **Unterer Neubergweg 19a**
 **W-8700 Würzburg(DE)**

(74) Vertreter: **Müller, Gerd et al**
 **Patentanwälte HEMMERICH-**
 **MÜLLER-GROSSE-POLLMEIER-MEY-VALENTI-**
 **N Hammerstrasse 2**
 **W-5900 Siegen 1(DE)**

PLAST-VERARBEITER, Band 34, Nr. 5, 1983, Seiten 427-432, Speyer/Rhein, DE; K. GISSING et al.: "Überwachung des Spritzgiessprozesses durch Messung viskositätsabhängiger Kenngrössen"

PLAST-VERARBEITER, Band 34, Nr. 10, 1983, Seiten 1105-1108, Speyer/Rhein, DE; A. LAMPL et al.: "Kontrolle des Formfüllvorganges beim Spritzgiessen mit Hilfe der Einspritzarbeit"

KUNSTSTOFFTECHNIK, Band 11, Nr. 7/8, Juli/August 1972, Seiten 180-183, Mainz, DE; T. SPEIL: "Präzision durch automatische Steuerung"

PLAST-VERARBEITER, Band 35, Nr. 5, Mai 1984, Seiten 82-85, Speyer/Rhein, DE; J. SCHIMMELE: "Gemeinsamer Nenner für Präzision und kostengünstige Fertigung"

**Beschreibung**

Die Erfindung betrifft ein Verfahren zum geregelten Spritzgießen von thermoplastischen Kunststoff-Formmassen auf unterschiedlichen Kunststoff-Spritzgießmaschinen mit stets gleichen Formteileigenschaften und gleichen Massen.

Bei einem aus der DE-C-2 532 429 bekannten Verfahren wird vor allem Wert auf den Übergang von der Formfüllphase in die Nachdruckphase ("Verdichtungsphase") gelegt, damit der Formfüllgrad besser reproduzierbar ist und damit die Maß- sowie die Gewichtsgenauigkeit innerhalb enger Toleranzen gesichert sind. Erreicht wird dieses durch eine reduzierte Einspritzgeschwindigkeit, ohne daß hierbei die Frage der Gefügestruktur als Folge der Verarbeitung behandelt wird, die in diesem Falle durch eine erhöhte Molekülorientierung bestimmt ist.

Aus der DE-A-2 358 911 ist es bekannt, den im Formnest anstehenden Druck sowie gegebenenfalls die Fließgeschwindigkeit der Formmasse zu regeln, wobei die Stellglieder auf den die Schnecke der spritzgießmaschine anstellenden Hydraulikzylinder einwirken und den Druck sowie gegebenenfalls die Vorschubgeschwindigkeit der Schnecke bestimmen, wobei der Benutzung hysteresefreier Meßgeber eine hohe Bedeutung beigemessen und gegebenenfalls auch die Massetemperatur im Werkzeug berücksichtigt werden. Auch hier werden zwar die Fließgeschwindigkeit sowie der Formmassendruck reproduziert, es werden aber weder Orientierungsvorgänge sowie deren Auswirkung angesprochen noch die Benutzung eines Werkzeuges in Verbindung mit unterschiedlichen Spritzgußmaschinen behandelt.

"KUNSTSTOFFTECHNIK", Band 11, Nr. 7/8, Juli/August 1972, Seiten 180 bis 183 weist zwar auf die Bedeutung der Reproduzierbarkeit der Einspritzzeit sowie der Einspritzdrucke und auf den Zusammenhang zwischen der Gefügestruktur und den erzielten mechanischen Eigenschaften hin, und erwähnt werden auch ein Wechsel eines Werkzeuges von einer ersten zu einer anderen Spritzgußmaschine und sich hierbei ergebende Schwierigkeiten, eine Lösung zu deren Behebung jedoch und damit eine gezielte, schnelle Einstellung einer Zweitmaschine werden nicht offenbart.

Es ist damit bisher kein Verfahren bekannt, mit dem sowohl die Orientierungen von Molekülen, Kristalliten und faserartigen Verstärkungsstoffen sowie die Größe und der Anteil der Kristallite von teilkristallinen Thermoplasten reproduzierbar konstant gehalten werden und gleichzeitig auch die erforderliche Maßkonstanz innerhalb enger Toleranzen erreicht wird. Vor allem aber ist kein Verfahren bekannt, nach dem Spritzgußteile aus einem bestimmten Werkzeug, hergestellt mit verschiedenen Spritzgießmaschinen, insgesamt gleiche Eigenschaften haben, d.h. gleiche Orientierungen, gleiche Kristallitausbildungen und gleiche Maße. Das ist das bekannte Problem der Konstanz der Eigenschaften von Probekörpern, die aus zwar gleichen Werkzeugen, aber notwendigerweise auf verschiedenen Maschinen hergestellt werden müssen, da eine Normung der Maschinen aus technischen und wirtschaftlichen Gründen ausscheidet.

Die Lösung dieses Problems, nämlich mit standartisierten Spritzgießwerkzeugen für Prokekörper auf zwar ähnlichen aber doch unterschiedlichen Spritzgießmaschinen völlig gleichartige Probekörper mit gleichen physikalischen Eigenschaften bei verschiedenen Firmen oder Instituten herzustellen, würde eine entscheidende Verbesserung der gesamten Kunststoff-Verarbeitung bedeuten, da ja auch Verarbeiter und Anwender die Einhaltung gleicher Qualitäten der Formteile wünschen. Im allgemeinen beschränkt man sich bisher darauf, Formteile mit konstanten Maßen, die innerhalb einer geforderten Toleranz liegen sollen, herzustellen, z.B. durch eine Nachdruck-Steuerung oder -Regelung. Es ist dabei häufig schon schwierig, mit einem bestimmten Werkzeug auf zwei oder mehreren Maschinen zu befriedigend gleichen Ergebnissen zu kommen. Man nimmt bisher in Kauf, daß Unterschiede in der Gefügestruktur durch unterschiedliche Orientierungen auftreten, wenn nur die i.a. wichtigste Eigenschaft der Formteile, nämlich die Maßhaltigkeit, befriedigt.

Ein Teilproblem der Maßhaltigkeit ist die Vermeidung des gefürchteten Verzuges bzw. der Verwerfung und der Wirkeländerung von Spritzgußteilen aus teilkristallinen Formassen, insbesondere bei Glasfaserverstärkung, infolge einer anisotropen, orientierungsbedingten Gefügestruktur oder infolge einer asymmetrischen Verteilung von Verstärkungsfasern in den beiden Außenschichten eines Formteiles, wodurch Schwindung und Nachschwindung in den Oberflächenschichten verschieden sind.

Die eingeschränkte Forderung lediglich nach einem konstanten Nachdruck und nach konstanten Formteilmaßen genügt somit nicht, insbesondere nicht bei der Herstellung von Probekörpern, an denen u.a. auch die mechanischen Eigenschaften zur Beurteilung der Formmassen gemessen werden. Wegen dieser Unzulänglichkeit in der Herstellung sind Werte der mechanischen Eigenschaften von Probekörpern keine zuverlässigen Kriterien der Formmasse-Eigenschaften, es handelt sich um Richtwerte von Herstellern dieser Formmassen, die bemüht sind, bei ähnlichen Herstellbedingungen für die Probekörper in einer Firma wenigstens Relativwerte zu erreichen, um so die Unterschiede der Formmassen ihres Programms zu charakterisieren.

Dieses Problem der z.Z noch unzulänglichen Probekörperherstellung ist jedoch zugleich auch ein Problem der gesamten Spritzgießtechnik. Der Wechsel von Werkzeugen auf verschiedene Spritzgießmaschinen eines Betriebes ist wegen optimaler Nutzung des Maschinenparks häufig erforderlich. Bei der Herstellung von Präzisionsteilen kann man sich einen Werkzeugwechsel wegen der geschilderten maschinenbedingten Einflüsse meistens garnicht erlauben, höchstens bei identischen Maschinen-Typen. Aber selbst bei unveränderter Kombination von Werkzeug und Maschine ist die zuverlässige Reproduzierbarkeit der Herstellung über einen längeren Zeitraum oder bei wiederholtem Anfahren der Fertigung nach Wochen oder Monaten nicht immer gegeben, was u.a. durch geringe Schwankungen der Formmassen hinsichtlich ihrer rheologischen Eigenschaften zu erklären ist.

So ist selbst bei gleichem Schmelzindex (MFI, gemessen in g/ 10 min nach DIN 53 735) aber bei verschiedenen Lieferungen ein unterschiedliches Fließverhalten möglich. Der Schmelzindex als Einpunktwert kann nicht die unterschiedliche Strukturviskosität und unterschiedliche Temperaturabhängigkeiten ausreichend erfassen. Daraus folgt, daß die Maschineneinstellungen in Temperaturen, Zeiten oder Drücken gelegentlich nachkorrigiert werden müssen, in Abweichung von den bei der Optimierung des Prozesses gefundenen und festgelegten Herstelldaten.

Diese Schwierigkeiten beim Bemühen um eine gleichbleibende Füllung der Kavitäten von Spritzzyklus zu Spritzzyklus und damit um konstante Maße der Formteile, auch bei schwankenden Viskositäten der Formmasse,versucht man z.Z. noch zu überwinden durch Messung und Regelung des Forminnendruckes. Aber auch ein konstanter Forminnendruck, der an einer bestimmten Stelle im Werkzeug gemessen wird - was im übrigen aus Platz- und Kosten-Gründen nur bei einem kleinen Teil der Werkzeuge realisierbar ist -, gibt keine 100 %-ige Gewähr für konstante Maße,geschweige denn für konstante Formteileigenschaften insgesamt.

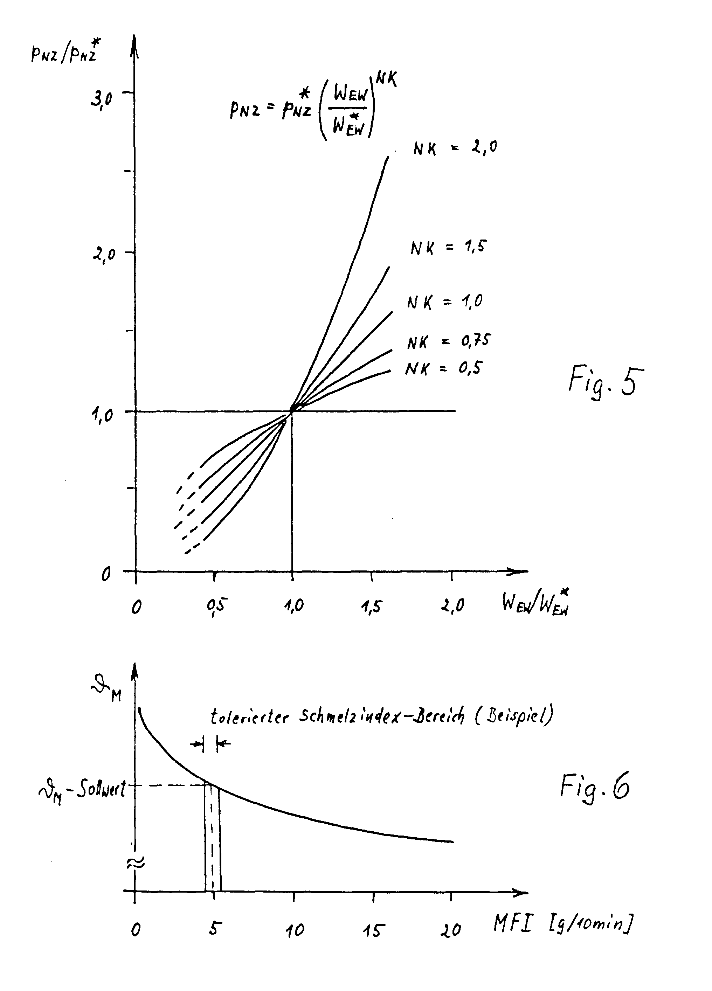

Trotz der oben erläuterten Einschränkungen ist die Bestimmung des Schmelzindexes wichtig für die erste Beurteilung der Verarbeitbarkeit und der Gleichmäßigkeit einer Förmmasse von Lieferung zu Lieferung. Falls nämlich zwei Formmassen deutlich verschiedene Schmelzindexwerte aufweisen, ist auch das Fließverhalten in der Verarbeitung verschieden. Zwischen Schmelzindex und optimaler Verarbeitungstemperatur einer Formmasse gibt es einen Zusammenhang, Fig.6. Nur innerhalb kleiner Schmelzindexbereiche (z.B. ± 10 %) ist eine bestimmte Formmasse-Temperatur ($\vartheta$M) optimal bezüglich vergleichbarer Orientierungen und Kristallitausbildungen. Weichen die MFI-Werte zu stark ab und werden die Grenzen nach Fig.6 über- bzw. unterschritten, liegt eine "neue Klasse" der Formmasseart vor, die einen neuen Wert für $\vartheta_M$ erforderlich machen kann.

Bei möglichst exakter Reproduzierbarkeit in der Herstellung von Probekörpern oder Präzisionsteilen mit stets gleichen mechanischen Eigenschaften ist daher auf eine bestimmte Tolerierung der Schmelzindexwerte zu achten, oder aber man gibt für unterschiedliche Schmelzindexwerte verschiedene mechanische Eigenschaften an, was bisher allerdings noch unterblieb. Man kann grundsätzlich nicht erwerten, daß bei größeren Streubreiten in den Schmelzindexwerten die Formteile sowohl in ihren mechanischen Eigenschaften als auch in der Maßhaltigkeit völlig gleich sind.

Es liegen zahlreiche Veröffentlichungen über die Einflüsse der Verarbeitung auf die Struktur des Gefüges und die Maßhaltigkeit von Kunststoff-Formteilen vor, einige seien erwähnt:

W. Woebcken u. L. Kniesburges: Heft 43 des Forschungskuratoriums Maschinenbau e.V., Frankfurt 1976

W. Woebcken : Z. Kunststoffe 67 (1977) S. 179-183

W. Woebcken: Z. Plaste und Kautschuk, 26 (1979) S.265-268

W. Woebcken: Z. Kunststoffe 71 (1981) S. 229-233

B. Heise u.a.: Colloid and Polymer Science, Mai 1982

Während der Nachdruckphase bilden sich im Formteilinneren des außen schon erstarrten Formteiles sogenannte Nachdruckorientierungen, auf die vor Jahren bereits W. Knappe in der Zeitschrift Kunststoffe hinwies. Da diese inneren Orientierungen die mechanischen Eigenschaften kaum beeinflussen und da sie andererseits bei dem vorgeschlagenen Herstellverfahren als konstant anzusehen sind, können ihre Einflüsse auf die Eigenschaften hier ausgeklammert werden.

Bei einer Analyse der steuerbareh und regelbaren Prozeßparameter beim Spritzgießen ergibt sich, daß von 8 maßgebenden, physikalisch wichtigen Prozeßparametern. die meiestn nicht direkt, bestenfalls indirekt geregelt werden können (W. Woebcken: Z. Plastverarbeiter 30 (1979) S.186-188), dazu gehört vorallem bisher die einflußreiche Einspritzzeit ($t_{EW}$). In der bisherigen Spritgießtechnik überläßt man die Schnecke beim Einspritzen der Formmasse dem Kräftespiel zwischen hydraulisch erzeugter Schubkraft und den rheologischen und nicht sicher voraussehbaren Widerstandskräften der zähflüssigen Schmelze. Das hat zur Folge, daß während der Erstarrung der laminaren Schmelze-Strömung infolge wechselnder Temperatur-Zeit-Verhältnisse von Spritzzyklus zu Spritzzyklus unterschiedliche Einfrier- und Kristallisationsvorgänge eintreten können, welche streuende Orientierungen und damit streuende mechanische Eigenschaften bewirken.

Ein erheblicher Mangel der bisherigen Spritzgießtechnik ist vor allem, daß nach einem Wechsel eines Spritzgießwerkzeuges auf eine andere Maschine infolge veränderter Angußlänge und Angußquerschnitte im Düsenbereich und veränderter Temperaturverhältnisse zwischen dem Zylinderkopf der Maschine und der Angußbuchse im Werkzeug sowie infolge unterschiedlicher Verhältnisse in der Hydraulik der Maschine, einschließlich der abweichenden Beschleunigungs- bzw. Trägheitskräfte, veränderte rheologische Randbedingungen vorliegen. Dadurch ist eine exakte Übertragung der bei der Optimierung auf einer ersten Maschine gefundenen Druckwerte im Zylinderkopf auf andere Maschinen nicht ohne weiteres möglich, ganz abgesehen davon, daß die verwendeten Druckmeßgeräte nicht geeicht sind und damit die Toleranzbreite dieser Druckwerte prozentual i.a. größer ist als die geforderten Toleranzen der Maße von technischen Formteilen, speziell von Präzisionsteilen.

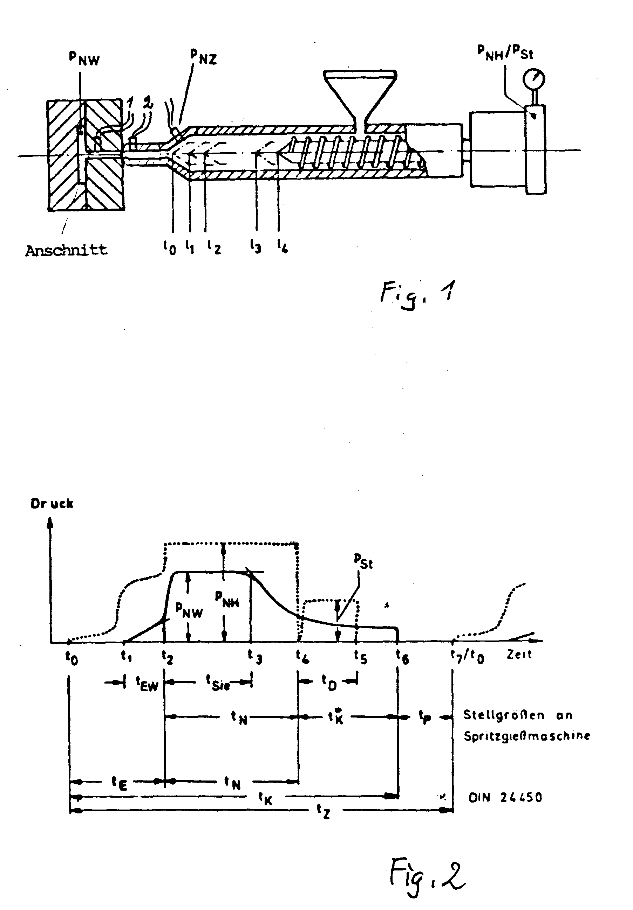

Es ist deshalb bisher nicht möglich, aus speziellen Maschinendaten einer ersten Spritzgießmaschine universelle Einstelldaten für ein gegebenes Spritzgießwerkzeug abzuleiten. Statt der **maschinenbezogenen** Prozeßdaten benötigt man, speziell für den Einspritzvorgang, **werkzeugbezogene** Daten. Das wird deutlich allein bei dem Unterschied zwischen der maschinenbezogenen Einspritzzeit ($t_E$) und der werkzeugbezogenen Einspritzzeit ($t_{EW}$), Fig.2.

Daraus folgt, daß auch der für die mechanischen Eigenschaften und für die Stabilität der Maße bei Erwärmung so einflußreiche Einspritzvorgang, u.U. unter Nutzung vorteilhafter Abkühlbedingungen nach dem p-v-T - Zustandsdiagramm, sorgfältiger als das bisher üblich ist, optimiert und vorallem für die spätere Fertigung fixiert werden muß, damit Formteile reproduzierbar mit stets gleichen Eigenschaften hergestellt werden können. Die Optimierung des Spritzgießprozesses erfordert vor allem das Erreichen der Sollmaße und der Verzugsfreiheit sowie die Einhaltung bestimmter mechanischer Werte und einer fehlerfreien Oberfläche. Eine Optimierung bedeutet gelegentlich einen technisch - wirtschaftlichen Kompromiß, bei dem lediglich das Erforderliche erreicht wird, unter Verzicht auf eine höchstmögliche Qualität. Von entscheidender Bedeutung dabei ist, daß die einmal festgelegte Qualität eines Formteiles in der laufenden Fertigung zuverlässig eingehalten wird. Deshalb kommt der Weiterentwicklung der Prozeßregelung beim Spritzgießen eine hohe Bedeutung zu.

Der Erfindung liegt die Aufgabe zugrunde, ein Verfahren zur Herstellung von Spritzgußteilen zu schaffen, mit dem es möglich ist, bei gleichen Spritzgießwekzeugen auf verschiedenen Spritzgießmaschinen, auch mit unterschiedlichen Schneckendurchmessern, gleiche Orientierungen von Molekülen, Kristalliten und Zusatzstoffen, d.h. damit gleiche mechanische Eigenschaften der Formteile, bei gleichen Eigenspannungen und gleichen Maßen zu erreichen.

Diese Aufgabe wird mit den kennzeichnenden Merkmalen des Patentanspruches 1 gelöst.

Zum Verständnis der Erfindung wurden die Figuren 1 bis 6 erstellt. Es zeigen:

Fig.1.    Schema der Spritzeinheit einer Spritzgießmaschine mit verschiedenen Schneckenstellungen

Fig.2.    Stellgrößen an einer Spritzgießmaschine

Fig.3.    Weg-Zeit-Kurven von Schnecken (A; B) bei gleicher Einspritzzeit ($t_{EW}$) und den normierten Schneckenweg ($s_E = f(t)$)

Fig.4.    Weg-Zeit-Kurven einer Schnecke bei gleicher Einspritzzeit ($t_{EW}$), jedoch unterschiedlichem Geschwindigkeitsprofil:

   1: zu Beginn langsamer Schneckenvorlauf

   2: zu Beginn rascher Schneckenvorlauf

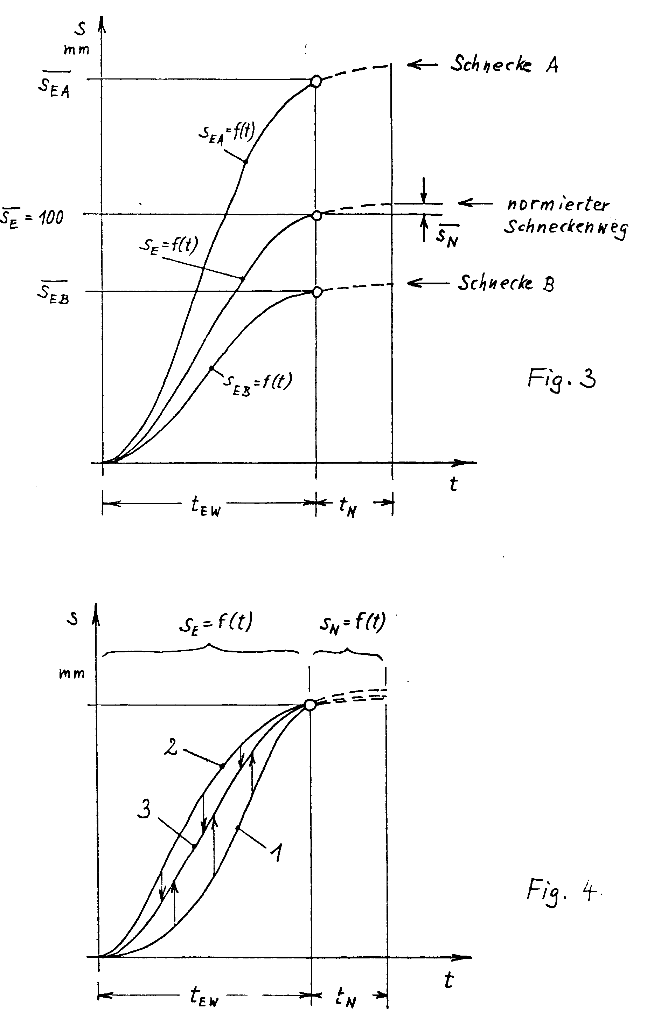

   3: geregelter Schneckenvorlauf gemäß der normierten Sollwert-Kurve nach Fig.3

Fig.5.    Nachdruckregelung nach einer Potenzformel mit Koppelung der Nachdruckhöhe an die jeweilige Einspritzarbeit

Fig.6.    Zusammenhang zwischen Schmelzindexwert (MFI) und zu wählender Massetemperatur ($\vartheta_M$) bei einer bestimmten Formmasseart

In den Figuren und im Text werden folgende Begriffe und Definitionen verwendet:

Schneckenstellungen

| | |
|---|---|
| $1_1 - 1_0$ | Restmassepolster |
| $1_0$ | vordere Schneckenendstellung |
| $1_1$ | Nachdruckstellung |
| $1_2$ | Umschaltpunkt auf Nachdruck |
| $1_3$ | Dosierstellung |
| $1_4$ | hintere Schneckenendstellung |
| s | Schneckenweg |

$s_E$     Schneckenweg während der Einspritzzeit

$s_{EA}$     Schneckenweg während der Einspritzzeit bei Schnecke A

$s_{EB}$     Schneckenweg während der Einspritzzeit bei Schnecke B

$\overline{s_E}$     normierter Schnecken-Endweg = 100 mm ( = 100 %) während der Einspritzzeit

$\overline{s_{EA}}$     Schnecken-Endweg bei Schnecke A

$\overline{s_{EB}}$     Schnecken-Endweg bei Schnecke B

$s_N$     Schneckenweg während der Nachdruckzeit

$A_Z$     Querschnittsfläche des Schneckenzylinders

Temperaturen

$\vartheta_M$     Massetemperatur

$\vartheta_W$     Werkzeugtemperatur

## Zeiten

$t_E$     maschinenbezogene Einspritzzeit

$t_{EW}$     werkzeugbezogene Einspritzzeit

$t_{Sie}$     Siegelzeit

$t_D$     Dosierzeit

$t_K$     wirksame Kühlzeit

$t_Z$     Zykluszeit

$\left.\begin{array}{l}\text{} \\ \text{} \\ \text{} \\ \text{} \\ \text{} \\ \text{}\end{array}\right\}$ indirekt einstellbar

$t_N$     Nachdruckzeit

$t_K^*$     Uhrzeit für Kühlung

$t_P$     Pausenzeit

$\left.\begin{array}{l}\text{} \\ \text{} \\ \text{}\end{array}\right\}$ direkt einstellbar

Drücke

$P_{EZ}$     Einspritzdruck im Zylinderkopf

$P_{NZ}$     momentaner Nachdruck im Zylinderkopf bei Regelung

$P_{NZ}$     Nachdruck im Zylinderkopf bei Optimierung

$P_{NH}$     Nachdruck in der Hydraulik

$P_{St}$     Staudruck in der Hydraulik

$P_{NW}$     Nachdruck im Werkzeug

NK     Faktor für Nachdruckkoppelung

Einspritzarbeit

$W_{EW}$     momentane Einspritzarbeit im Zylinderkopf

$W_{EW}$     Einspritzarbeit im Zylinderkopf bei Optimierung

$W_{NW}$     Nachdruckarbeit im Zylinderkopf

Schnecken-Anpassung

$K_s$     Scnecken-Anpassungsfaktor

$s_{E1}$     Schnecken-Endweg bei einer ersten Schnecke

$A_1$     Querschnittsfläche eines ersten Schnecken-Zylinders

$A_2$     Querschnittsfläche eines zweiten Schnecken-Zylinders

Die Einflüsse der maschinenbezogenen Prozeßdaten sollten nach dem vorgeschlagenen Spritzgießverfahren möglichst gering gehalten und vornehmlich die werkzeugbezogenen Daten berücksichtigt werden.

Wie Fig.2 zu entnehmen ist, beginnt der Einströmvorgang der Schmelze in das Werkzeug später als der Druckanstieg in der Hydraulik. Beginn und Ende der werkzeugbezogenen Einspritzzeit ($t_{EW}$), des werkzeugbezogenen Schneckenweges (s) und der werkzeugbezogenen Einspritzarbeit ($W_{EW}$) werden bestimmt durch den flachen Druckanstieg beim Einströmen und den steilen Druckanstieg nach Füllung des Werkzeuges ($P_{NW}$) (Fig.2) bzw. in unmittelbarer Nähe des Anschnittes (Fig.1).

Gemäß Anspruch 1 wird die Schmelze der Kunststoff-Formmasse **während der Einspritzphase** aus dem Spritzzylinder einer Spritzeinheit von einer zweiten oder folgenden Maschine mit beliebigem Schnekkendurchmesser nach einem gespeicherten Schneckenvorlaufprogramm in die Kavität überführt. Die programmierte Schneckenvorlaufbewegung wird durch die zentrale Prozeßregelung so durchgeführt, daß nicht nur die Einspritzzeit ($t_{EW}$) gleich ist der bei der Optimierung des Prozesses auf einer ersten Maschine. Zugleich wird auch die Weg-Zeit-Kurve ($s_{EA}$ = f(t); $s_{EB}$ - f(t)) der Schnecke (A;B) in dieser Einspritzzeit ($t_{EW}$), jeweils bezogen auf einen normierten Schnecken-Endweg ($\overline{s_E}$) von 100 mm (bzw. 100 %), durch die Regelung der Vorlaufgeschwindigkeit voll angeglichen an die Weg-Zeit-Kurve des Optimierungs-Prozesses. Dies gelingt mit einem leistungsfähigen, geregelten Hydraulikantrieb, der zur Beeinflussung des Geschwindigkeitsprofils der Schnecke z.B. elektromagnetische Proportionalventile, ein Servosystem mit Verstärker oder einen elektrohydraulischen Drehmomentenverstärker verwendet. Dadurch gelingt es, daß der Einströmvorgang in das Werkzeug unverändert bleibt gegenüber dem bei der Optimierung, wodurch die Orientierungsvorgänge ebenfalls identisch sind mit denen bei der Optimierung des Prozesses.

Der werkzeugbezogene Schneckenweg (s) als Funktion der Zeit, der sich bei der Optimierung ergibt, stellt die Sollwert-Kurve ($s_{EA}$ - f(t); $s_{EB}$ = f(t)) (Fig.3) dar; sie wird, zugleich damit auch die werkzeugbezogene Einspritzzeit ($t_{EW}$), gespeichert.

Im Prozeßrechner wird dann die gefundene Sollwert-Kurve ($s_{EA}$ = f(t); $s_{EB}$ = f(t)) in der Weise normiert, daß ihr Endwert rechnerisch gleich 100 Längeneinheiten ($\overline{s_E}$ = 100 mm) bzw. gleich 100 % gesetzt wird.

Nach Umspannen des Werkzeuges auf eine andere Maschine mit i.a. abweichendem Schneckendurchmesser wird der neue Endwert für den Schneckenweg ($\overline{s_{EA}}$ ; $\overline{s_{EB}}$) der Schnecke (A; B) für die gleiche Einspritzzeit ($t_{EW}$) durch Versuch ermittelt und gespeichert (Fig.3). Hierbei kann auch ein u.U. vorhandener Leckstrom der Schmelze infolge eines Verschleißes von Zylinder, Schnecke oder Rückströmsperre berücksichtigt werden.

Aus den Schnecken-Endwerten ($\overline{s_{EA}}$) und ($\overline{s_E}$) bzw. ($\overline{s_{EB}}$) und ($\overline{s_E}$) wird ein Schneckenanpassungsfaktor $Ks = \overline{s_{EA}} : \overline{s_E}$ bzw. $K = \overline{s_{EB}} : \overline{s_E}$ gebildet und im Prozeßrechner gespeichert. Daraufhin erfolgt die Regelund der Schneckenvorlaufbewegung auf der zweiten bzw. folgenden Spritzgießmaschine, indem jeder Punkt der Weg-Zeit-Kurve ($s_{EA}$ = f(t); $s_{EB}$ = f(t)) für die Schnecke (A; B) durch Multiplizieren des diesem entsprechenden Punktes der gespeicherten normierten Sollwere-Kurve ($s_E$ = f(t)) mit dem Anpassungsfaktor ($K_s$) gebildet wird, wobei die Schnecke (A; B) diesem Weg-Zeit-Verlauf bei stets gleicher Einspritzzeit ($t_{EW}$) geregelt folgt (Fig.3 und 4).

Die hierdurch erzeugten stets gleichen Einström- und Orientierungs-Vorgange in der Schmelze sind eine wesentliche Voraussetzung nicht nur für gleiche mechanische Eigenschaften der Formteile sondern auch für eine bessere Konstanz der Nachdruckverhältnisse in der folgenden Nachdruckphase. Dies verfahren der Schneckenweg-Normierung schafft somit die Vorraussetzung für die Universalität des Regelprogramms für beliebige Maschinen ähnlicher Leistung.

Gamäß der Erfindung wird der Nachdruck im Zylinderkopt ($P_{NZ}$) (Fig. 1) **während der Nachdruckphase** nach Umspannnen des Werkzeuges auf die zweite oder folgende Maschine auf einen Nachdruck ($P_{NZ}^*$) als Funktion der Zeit oder des Weges in einer solchen Höhe nachgestellt, daß sich wieder gleiche Formteilmaße wie bei der Optimierung ergeben. Sofern bei der Optimierung während der Nachdruckphase ein bestimmtes Nachdruckprofil als Funktion der Zeit oder des Nachdruckweges ($s_N$) (Fig.3) gewählt wurde, wird dieses Nachdruckprofil multiplikativ erhöht bzw. erniedrigt, bis sich wieder gleiche Formteilmaße wie bei der Optimierung ergeben. Der so nachgestellte Nachdruck ($P_{NZ}$ )

Die sich hierbei ergebende Einspritzarbeit ($W_{EW}$ )während der werkzeugbezogenen Einspritzzeit ($t_{EW}$) ergibt sich aus der mathematischen Beziehung:

$$W_{EW}^* = A_Z \int P_{EZ} \cdot d\, s_E \qquad\qquad (1)$$

Dieser Wert für die Einspritzleistung bei Optimierung ($W_{EW}$ )

Die Nachdruckhöhe bzw. die Nachdruckarbeit wird nunmehr gekoppelt an die im gleichen Spritzzyklus unmittelbar vorher ermittelte Einspritzarbeit ($W_{EW}$), die sich ein wenig von der bei der Optimierung

ermittelten Einspritzarbeit ($W_{EW}$ )unterscheiden kann, weil die Viskosität der Schmelze infolge Chargenschwankungen oder Temperaturschwankungen von diesem bei der Optimierung erhaltenen Wert abweichen kann. Die Koppelung der Nachdruckarbeit ($W_{NW}$) erfolgt in erster Näherung proportional zur jeweiligen Einspritzarbeit ($W_{FW}$), dabei ist unter der werkzeugbezogenen Nachdruckarbeit ($W_{NW}$) zu verstehen:

$$W_{NW} = A_Z \int P_{NZ} \bullet d \, s_N \qquad (3)$$

Da der Nachdruck ($P_{NZ}$) wegen der geringen Schneckengeschwindigkeiten während der Nachdruckphase praktisch unabhängig von den geringen Massenbeschleunigungen bzw. Trägheitskräften und von hydraulischen Druckverlusten und damit als nahezu konstant anzusehen ist, und da ebenso auch der normierte Schneckenweg in dieser Zeit ($S_N$) (Fig.3) wegen des - gemäß der erfinderischen Aufgabe - stets gleichen Füllgrades konstant ist, wird $P_{NZ}$ auf einen Wert geregelt, der zunächst proportional zur Einspritzarbeit ($W_{FW}$) ist. Bei einem Schneckenverschleiß sind sowohl die Einspritzarbeit ($W_{FW}$) als auch die Nachdruckarbeit ($W_{NW}$) größer, eine möglicherweise notwendige Feinregulierung der Nachdruckhöhe wird durch die Anpassung des Faktors für die Nachdruckkoppelung (NK) vorgenommen.

Der Umschaltpunkt auf Nachdruck wird - i.a. wegabhängig - so fixiert, daß der Nachdruck am Rückstau-Punkt (Steilanstieg des $P_{NW}$- und des $P_{NZ}$- Wertes) wirksam wird, und zwar vor dem Maximum von $P_{NW}$ bzw. $P_{NZ}$ (Fig.2).

Die Nachdruckzeit ($t_N$) (Fig.2) wird so festgesetzt, daß der tatsächliche Siegelpunkt (nicht zu verwechseln mit dem nach Fig.2 zeichnerisch ermittelten Siegelpunkt) gerade überschritten wurde, was durch die Konstanz der Formteilgewichte nachzuweisen ist. Ebenso sind die Kühlzeit ($t_K$) und die Zykluszeit ($t_Z$) (Fig.2) nach diesem Verfahren zur Erzielung eines stets gleichen Gefüges konstant zu halten und dürfen nicht etwa mit den sonst üblichen kleineren oder größeren Schwankungen der Einspritzzeit ($t_{EW}$) veränderlich sein.

Die in diesem Verfahren definierte Einspritzarbeit ($W_{EW}$) ist nicht identisch mit der von B. Just vorgeschlagenen, in der Ölhydraulik gemessenen Arbeit, bezeichnet als"Fließindex" oder "Füllindex" (Bosch, Technische Berichte, Band 7 (1981), Robert bosch GmbH). Eine Regelung der Nachdruckhöhe über den "Fließindex" aus der Hydraulik ist zwar vorteilhaft aber nicht fehlerfrei. Die direkte Messung der werkzeugbezogenen Einspritzarbeit ($W_{EW}$) vermeidet diese Fehler oder Abweichungen in der Hydraulik, z.B. aus Druokstößen, und vor allem aus der Reibung zwischen Schnecke und Zylinder. Weiterhin ist die gleichzeitige Nutzung des Druckfühlers im Zylinderkopf für andere Verfahrensschritte vorteilhaft bei dem hier vorgeschlagenen Verfahren.

Der Nachdruck ($p_{NZ}$) kann innerhalb der zulässigen Nachdruckbereiche variiert werden, ohne daß infolge zu geringen Druckes Einfallstellen in der Formteil-Oberfläche oder infolge zu großen Druckes zu große Zugeigenspannungen in der Formteil-Oberfläche mit der Gefahr der Spannungsrißbildung entstehen. Bei vielen Formmassen und Formteil-Geometrien kann der Nachdruck im Werkzeug ($p_{NW}$) 200 bis 600 bar betragen; der Nachdruck im Zylinder ($p_{NZ}$) ist dann entsprechend dem Druckabfall in Düse und Angußkanal etwas höher.

Nach den ersten Anpassungsmaßnahmen der Schneckenweg-Normierung und der Nachstellung der Nachdrukhöhe zur Erzielung gleicher Formteilmaße erfolgt als dritter Schritt die Koppelung der Nachdruckhöhe ($p_{NZ}$) an die Einspritzarbeit ($W_{EW}$) bei Variation des Faktors NK über bzw. unter NK = 1,0, um die Nachdruckregelung stabil gegenüber kleinen Viskositätsschwankungen der Schmelze zu machen.

Die Formmasse-Temperatur ($\vartheta_M$), welche - wie auch die Werkzeug-Temperatur ($\vartheta_W$) - in bekannter Weise auf die für die betreffende Formmasse optimalen, normalen Werte einzuregeln ist, wobei Schneckendrehzahl und Staudruck ($p_{St}$)(Fig.1 und 2) mit ihren Auswirkungen auf die Höhe der Massetemperatur ($\vartheta_M$) ebenfalls fixiert werden müssen, wird vorübergehend um einen bestimmten Betrag, z.B. 7 bis 10 K, höher eingestellt. Die Höherstellung kann in diesem Fall unter Verzicht auf eine direkte Temperaturmessung der Schmelze mit einem Einstichthermometer erfolgen, indem lediglich die dem Düsenausgang am nächsten gelegenen Temperaturfühler für die Temperaturregelung benutzt werden. Nach Angleichung des Temperatur-Istwertes an den neuen Sollwert sind Maßkontrollen an den Formteilen durchzuführen. Sofern ein entscheidendes Formteilmaß dann größer wurde (stärkere Werkzeugfüllung), ist die Nachdruckkoppelung (NK) (Fig.5) auf einen Wert über 1,0 einzustellen und die Maßkontrolle zu wiederholen, bis Maßgleichheit eintritt. Sofern das Formteilmaß kleiner wurde (geringere Werkzeugfüllung), ist die Nachdrukkoppelung (NK) auf einen Wert unter 1,0 einzustellen und die Maßkontrolle zu wiederholen, bis Maßgleichheit erreicht ist. Anschließend wird die Massetemperatur ($\vartheta_M$) auf den ursprünglichen Sollwert zurückgestellt und die Maßgleichheit noch einmal kontrolliert. Danach ist die Prozeßregelung für die Fertigung freigegeben.

Die vorgesehenen Maßnahmen zur Regelung des Restmassepolsters ($1_1$ - $1_0$) (Fig.1) werden im Hinblick auf zunehmende Verwendung von Glasfasern, Glaskugeln, Talkum u.a. dringender als in früheren Jahren, wenn auch angestrebt werden sollte, gepanzerte Schnecken und Zylinder zu wählen, sofern das möglich ist, um Verschleiß an diesen Elementen zu vermeiden oder zu mindern. Die Schwierigkeiten einer genauen Regelung des Restmassepolsters sind nicht gering, davon hängt jedoch auch ab, ob der Umschaltpunkt auf Nachdruck wegabhängig fixiert werden kann. Wenn als Zielvorstellung das starre, unveränderliche Zeitprogramm der Schnecke mit einer **Zwangsförderung der Schmelze,** unabhängig von ihrer Viskosität, richtig und optimal ist, so muß man auch das Problem der Restmassepolster-Veränderung aufgreifen. Zweifellos wäre es ratsam, von einer gewissen Leckströmung an ein Signal zu geben für den Austausch der verschlissenen Schnecke, des Zylinders oder der Rückströmsperre. Auch aus diesem Grunde ist die Regelung des Restmassepolsters ein wichtiger Schritt. Für bestimmte Formteil-Fertigungen sollte diese Regelung abschaltbar sein.

Zur Durchführung des Verfahrens Normierung der Weg-Zeit-Kurven der Schneckenbewegung zusammen mit der Nachdruckkoppelung an die werkzeugbezogene Einspritzarbeit ($W_{EW}$) sind folgende **Vorrichtungen** vorgesehen:

Zur Messung von Beginn und Ende der werkzeugbezogenen Einspritzzeit ($t_{EW}$) und zugleich des werkzeugbezogenen Schneckenweges ($s_F$) und der werkzeugbezogenen Einspritzarbeit ($W_{EW}$) sind einige Sensoren vorgesehen, die den Einströmvorgang der Schmelze in das Werkzeug und den Rückstau nach voller Benetzung aller Konturen registrieren und an die zentrale Prozeßregelung zur Auslösung weiterer Verfahrensschritte weitergeben.

So kann ein in Anschnittnähe eingebauter Druckmeßfühler (Fig.1), der entweder im Werkzeug (1) oder in der Düse der Spritzeinheit (2) eingebaut ist, mithilfe der Differenzierung des plötzlich einsetzenden flachen Druckansteiges für den Werkzeuginnendruck ($p_{NW}$) (Fig.2) den Beginn, nach Einsetzen des Steilanstieges des Druckes das Ende der werkzeugbezogenen Einspritzzeit ($t_{EW}$) messen. Der Beginn kann andererseits auch durch ein Thermoelement im Werkzeug gemessan werden, welches gegenüber dem Anschnitt mit dem ersten Formmasseeintritt (Fließfrontspitze) eingebaut ist. Das Ende der Einspritzzeit ($t_{EW}$) kann alternativ auch durch einen Druckmeßfühler im Zylinderkopf mit einem Druckmeßfühler gemessen werden, der zur Vergleichbarkeit verscheidener Spritzgießmaschinen stets in der Mitte der Kegeligen Fläche des Zylinderkopfes angebracht sein sollte (Fig.1). Mit diesem Fühler kann gleichzeitig der Istwert des zu regelnden Nachruckes ($p_{NZ}$) gemassen werden.

Statt mit Druckmeßfühlern kann man auch mit einem Thermoelement, welches am Ende der Fließfront im Werkzeug einzubauen ist, das Ende der Einspritzzeit ($t_{EW}$) bestimmen. Dies setzt jedoch voraus, daß man zuverlässig voraussehen kann, wie der Fließfrontverlauf im Werkzeug ist, was u.U. mit einem CAD-Verfahren (Füllbildmethode) erfolgen kann.

Der erhöhte Aufwand der Regelung von Einspritz- und Nachdruck-Phase hat natürlich zur Voraussetzung, daß das Werkzeug stabil und fachgerecht gebaut wurde und keine unzulässigen Verformungen oder - bei mangelhafter Schließkarft - Atmungsbewegungen erfärt. Hier sind in der Praxis häufig Mängel durch zu "weiche" Werkzeuge zu beklagen, die vorher beseitigt werden müssen. Auch ist die fachlich richtige Messung der Temperaturen von großer Bedeutung, wenn gleiche Ergebnisse mit einem Werkzeug auf verschiedenen Maschinen erzeilt werden sollen. Die Formmasse-Temperatur ($\vartheta_M$) wird zweckmäßigerweise dadurch bestimmt, daß man im Rhythmus der im thermischen Gleichgewicht arbeitenen Maschine einen Schuß Masse in einen Teflonbecher spritzt, in dem ein empfindliches Thermoelement eingebaut ist (s. Lit.: W. Woebcken und L. Kniesburges S. 4 dieser Schrift). Die Werkzeugtemperatur wird ebenfalls nach Erreichen des thermischen Gleichgewichtes durch Abtasten mit einem rasch reagierenden Thermofühler zu definierter Zeit gemessen.

Die Anzeige der normierten Weg-Zeit-Kurve der Schnecke ($s_E$ = f(t)) auf einem Bildschirm ermöglicht in einer gemeinsamen Wiedergabe von Sollwert-Kurve und Istwert-Kurve die Kontrolle der Genauigkeit der Regelung der Schneckenbewegung. Gleichzeitig sind weitere Prozeßdaten sichtbar zu machen, wie z.B. der genaue Wert der letzten Einspritzzeit ($t_{EW}$), der Schnecken-Anpassungsfaktor ($K_s$) und seine mögliche Abweichung vom rechnerischen Wert bei Erhaltung des Volumens ($K_{s2}$ = $\overline{s_{E1}}$ . $A_1$ : 100 . $A_2$), die jeweilige letzte Einspritzarbeit ($W_{EW}$) und der Nachdruck ($P_{NZ}$) sowie der Faktor für die Nachdruckkoppelung (NK). Weiterhin sollte die Verschiebung der Dosierstellung bei Schneckenverschleiß innerhalb eines zu tolerierenden Bereiches angezeigt werden können, u.U. mit Warnzeichen bei Erreichen zu großer Werte.

Der Heißkanal und ebenso der Isolierkanal als Varianten für Angußsysteme in Werkzeugen bedeuten für den Schmelzefluß eine Verlängerung der Düse bis in das Innere des Werkzeuges, wodurch größere Druckverluste zu erwarten sind. Anderseits sind Punkt- und Filmanschnitte Engpässe im Fleißweg, welche die Siegelzeit ($t_{Sie}$) verkürzen und die Nachdruckwirkung begrenzen. Das wird Einfluß auf den Faktor für die Nachdruckkoppelung (NK) in der Anpassung eines Werkzeuges an eine Spritzgießmaschine haben.

Bei dünnwandigen Formteilen ist die Messung der werkzeugbezogenen Daten besonders wichtig, weil die an der Maschine gemessenen Zeiten deutlich von den Werkzeugdaten abweichen können. Man sollte an dem Prinzip festhalten, möglichst echte Werkzeugdaten - am Ort des Geschehens - zu messen und zur Regelung zu verwenden. Dies ist verfahrenstechnisch sinnvoll, macht allerdings häufig technische Schwierigkeiten. Deshalb muß gelegentlich ein Kompromiß gesucht werden, indem man die Maschine - im Sinne der Werkzeug-Daten - mit Maschinen-Daten regelt.

Schließlich ist zu bedenken, daß die Patentanmeldung zwar thermoplastische Kunststoffe betrifft, jedoch sind auch einige Elastomere und thermoplastische Elastomere in ähnlicher Weise zu verarbeiten, sodaß das vorgeschlagene Verfahren für solche Polymeren ebenfalls anzuwenden ist. Bei Duroplasten spielt der exakte Zeitablauf in der Einspritzphase nicht die gleiche Rolle, jedoch kann die Nachdruckregelung des vorgeschlagenen Verfahrens auch bei diesen Formmasssen vorteilhaft sein.

Ein wesentlicher Vorteil des neuen Verfahrens ist auch, daß die i.a. wichtigste Eigenschaft von Spritzgußteilen, nämlich die Maßhaltigkeit, durch die mehrfachen Maßkontrollen bei der Optimierung des Spritzgießprozesses, der Nachstellung auf folgenden Maschinen und bei der Koppelung der Nachdruckhöhe an die Einspritzarbeit direkt gemessen wird und nicht etwa sekundäre Größen wie Drücke, deren Werte maschinenbezogen sind. Damit wird die Artikelqualität sicherer. Die Druckwerte in der Hydraulik, im Zylinderkopf oder im Werkzeug sind lediglich Hilfsmittel zum Erreichen der geforderten Maße. Deshalb können die verwendeten Druckmeßfühler und Druckanzeigegeräte durchaus ungeeichte Geräte sein, sie müssen lediglich konstante und reproduzierbare Signale geben bzw. Anzeigewerte aufweisen.

Mit dem neuen Verfahren wird die Gleichmäßigkeit der Fertigung insbesondere deshalb verbessert, weil die stets zu erwartenden geringen Schwankungen der Viskosität der Schmelze zu keinem Untershied im Füllgrad und damit zu keinen Maßabweichungen führen, wie das bisher zu beobachten ist. Chargenschwankungen sind bis zu einem gewissen Umfang durch die angepaßte Nachdruckkoppelung ohne Auswirkung auf die Maße. Damit ist die neue Einstellstrategie für automatische Fertigungen besonders vorteilhaft.

**Patentansprüche**

1. Verfahren zum Spritzgießen von thermoplastischen Kunststoff-Formmassen, bei dem die Kunststoff-Formmasse mittels einer axial verschiebbar gelagerten Schnecke nach Optimieren des Spritzgieß-Prozesses in stets gleicher Weise gefördert, plastifiziert und während einer Einspritzphase in ein temperiertes geschlossenes Spritzwerkzeug eingespritzt wird sowie während einer folgenden Nachdruckphase während eines weiteren Zeitintervalls ($t_N$) unter Druck gehalten wird, wobei ein als Differenz der am Ende der Nachdruckphase erreichten Stellung der Schnecke und deren Extremstellung sich ergebendes Restmassepolster ($1_1$ -$l_0$) durch automatische Regelung der posierstellung auf einem konstanten Wert gehalten wird, indem es am Ende der Nachdruckzeit gemessen wird und seinen Sollwert mit ausreichender Genauigkeit durch kleine Regelungsschritte mit einer Toleranz für das Restmassepolster von unter ± 0,1 mm einhält, **dadurch gekennzeichnet,**
daß ein bei der Optimierung auf einer ersten Spritzgußmaschine (A) gefundener, durch die Formmasse, das Spritzgießwerkzeug und das Geschwindigkeitsprofil der Schnecke beeinflußter, zur Erzielung bestimmter physikalischer Formteileigenschaften erforderlicher werkzeugbezogener Schnekkenweg (s) als Funktion der Zeit als Sollwert-Kurve ($s_{EA}$ = f(t), $s_{EB}$ = f(t)) mit der werkzeugbezogenen Einspritzzeit ($t_{EW}$) gespeichert wird,
daß die gefundene Sollwert-Kurve ($s_{EA}$ = f(t), $s_{EB}$ = f(t)) in der Weise normiert wird, daß ihr Endwert gleich 100 Längeneinheiten ($s_E$ = 100 mm) bzw. gleich 100% gesetzt wird, daß das Spritzgießwerkzeug, wie bekannt, auf eine andere spritzgießmaschine mit einem i.a. abweichenden Schneckendurchmesser gespannt wird,
daß der neue Endwert für den Schneckenweg ($\overline{s_{EA}}$, $\overline{s_{EB}}$) der Schnecke (A, B) für die gleiche Einspritzzeit ($t_{EW}$) ermittelt und gespeichert wird,
daß aus den Schnecken-Endwerten ($\overline{s_{EA}}$) und ($\overline{s_E}$) bzw. ($\overline{s_{EB}}$) und ($\overline{s_E}$) ein Schnecken-Anpassungsfaktor $K_s$ = $\overline{s_{EA}}$ : $\overline{s_E}$ bzw. $K_s$ = $\overline{s_{EB}}$ : $\overline{s_E}$ gebildet und gespeichert wird,
daß jeder Punkt der Weg-Zeit-Kurve ($s_{EA}$ = f(t), $s_{EB}$ = f(t)) für die Schnecke (A, B) durch Multiplikation des entsprechenden Punktes der gespeicherten normierten Sollwert-Kurve ($s_E$ = f(t)) mit dem Anpassungsfaktor $K_s$ gebildet wird und die Bewegung der Schnecke diesem Weg-Zeit-Verlauf bei stets gleicher Einspritzzeit ($t_{EW}$) geregelt folgt, und daß der bei der Optimierung auf einer ersten Spritzgießmaschine gefundene, zur Erzielung bestimmter Formteilmaße erforderliche Nachdruck im Zylinderkopf ($P_{NZ}$) oder das erforderliche zeit- bzw. wegabhängige Nachdruckprofil nach Umspannen des Spritzgießwerkzeuges auf eine zweite Maschine mit einem Nachdruck $P_{NZ}^x$ als Funktion der Zeit bzw. des Weges bis zum Erreichen gleicher Formteilmaße, wie sie sich bei der Optimierung auf der ersten Maschine ergaben, nachgestellt und gespeichert wird.

2. Verfahren nach Anspruch 1,

**dadurch gekennzeichnet,**
daß die beim Einrichten des Spritzgießwerkzeuges auf einer zweiten oder folgenden Spritzgießmaschine während der werkzeugbezogenen Einspritzzeit ($t_{EW}$) sich ergebende werkzeugbezogene Einspritzarbeit

$$W_{EW}X = A_Z \int P_{EZ} \cdot d\, s_E \qquad (1)$$

gespeichert wird, daß der Nachdruck ($P_{NZ}$) gemäß der mathematischen Beziehung:

$$P_{NZ} = P_{NZ_X} \left( \frac{W_{EW}}{\overline{W}_{EW}} x \right)^{NK} \qquad (2)$$

mit den gespeicherten Werten für $P_{NZ}X$ und $W_{EM}\,X$ und dem unmittelbar vorher ermittelten Wert für die Einspritzarbeit ($W_{EW}$) errechnet und wirksam wird, wobei der Faktor für die Nachdruckkopplung $NK = 1$ gesetzt wird, daß anschließend die Massetemperatur ($\vartheta_M$) um einen bestimmten Betrag $\Delta\vartheta_M$ erhöht wird,
daß nach mehreren Spritzzyklen an den Formteilen eingetretene Maßabweichungen ermittelt werden,
daß je nach Abweichung der Maße von den Sollwerten der Faktor für die Nachdruckkopplung (NK) über 1,0 erhöht oder unter 1,0 erniedrigt wird, bis nach weiteren Spritzzyklen die gewünschten Sollwerte der Maße, insbesondere der Sollwert von einem entscheidenden Hauptmaß, erreicht werden,
und daß die Massetemperatur ($\vartheta_M$) um den Betrag $\Delta\vartheta_M$ auf den ursprünglichen Wert zurückgestellt und die Prozeßregelung nach dieser Anpassung für die Fertigung freigegeben wird.

**Claims**

1. Method for the injection moulding of moulding masses of thermoplastic synthetic material, in which the moulding mass of synthetic material is conveyed in constantly the same manner by means of an axially displaceably mounted worm after optimising of the injection moulding process, is plasticised and is injected during an injection phase into a heated and closed injection moulding tool, as well as is held under pressure during a following compaction phase for a further time interval ($t_N$), wherein a residual mass cushion ($1_1 - 1_0$) resulting as difference between the setting of the worm reached at the end of the compaction phase and the extreme setting thereof is held at a constant value by automatic regulation of the metering setting, in that it is measured at the end of the compaction time and keeps its target value with sufficient accuracy through small regulating steps at a tolerance for the residual mass cushion of less than ± 0.1 millimetres, characterised thereby that a required worm travel (s), which is related to the tool, is found in the optimising to a first injection machine (A) and is influenced by the moulding mass, by the injection moulding tool and by the speed profile of the worm, for the attainment of determined physical properties of the moulded part is stored as a function of time as target value curve ($S_{EA} = f(t)$, $s_{EB} = f(t)$) with the injection time related to the tool, that the found target value curve ($s_{EA} = f(t)$, $s_{EB} = f(t)$) is normalised in the manner that its end value is set to be equal to 100 length units ($S_E = 100$ millimetres) or equal to 100%, that the injection moulding tool is, as is known, clamped to another injection moulding machine with, amongst other things, a differing worm diameter, that the new end value for the worm travel ($\overline{S_{EA}}$, $\overline{s_{EB}}$) of the worm (A, B) is ascertained for the same injection time ($t_{EW}$) and stored, that a worm adaptation factor $K_s = \overline{S_{EA}} : \overline{s_E}$ and $K_s = \overline{s_{EB}} : \overline{s_E}$ is formed respectively from the worm end values ($\overline{s_{EA}}$) and ($\overline{s_E}$) or ($\overline{s_{EB}}$) and ($\overline{s_E}$) and stored, that every point of the travel-time curve ($s_{EA} = f(t)$, $s_{EB} = f(t)$) for the worm (A, B) is formed by multiplication of the corresponding point of the stored normalised target value curve ($s_E = f(t)$) by the adaptation factor $K_s$ and the movement of the worm follows this travel-time course with constantly the same injection time ($t_{EW}$) being regulated, and that the required compaction ($P_{NZ}$), which is found in the optimising to a first injection moulding machine, in the cylinder head for the attainment of a determined moulded part mass or the required time-dependent or travel-dependent compaction profile after reclamping of the injection moulding tool to a second machine is reset with a compaction $N_{NZ}^X$ as a function of the time or of the travel up to achieving the same moulded part mass as resulted in the optimising to the first machine and is stored.

**2.** Method according to claim 1, characterised thereby, that the injection work

$$W_{EW}x = A_Z \int P_{EZ} \cdot d\, s_E,$$

which is related to the tool and which results during the injection time ($t_{EW}$) related to the tool, when setting the injection moulding tool up on a second or subsequent injection moulding machine, is stored, that the compaction ($P_{NZ}$) is calculated according to the mathematical equation:

$$P_{NZ} = P_{NZ_x} \left( \frac{W_{EW}}{W_{EW}x} \right)^{NK}$$

with the stored values for $P_{NZ}x$ and $W_{EW}x$ and the value ascertained immediately before for the injection work ($W_{EW}$), and becomes effective, wherein the factor for the compaction linkage NK = 1 is set, that subsequently the mass temperature ($\vartheta_M$) is increased by a certain amount $\Delta\vartheta_M$, that the mass deviations occurring at the moulded parts are ascertained after several injection cycles, that the factor for the compaction linkage (NK) is increased above 1.0 or reduced below 1.0 according to the deviation of the amounts from the target values until, after further injection cycles, the desired target value of the amounts, especially the target value of a decisive main amount, is reached, and that the mass temperature ($\vartheta_M$) is set back by the amount $\Delta\vartheta_M$ to the original value and after this adaptation the process regulation is released for the production.

## Revendications

**1.** Procédé pour le moulage par injection de matières synthétiques thermoplastiques moulables selon lequel la masse moulable synthétique est, après optimisation du procédé de moulage par injection, alimentée (de façon toujours semblable), à l'aide d'une vis déplaçable axialement, plastifiée de façon toujours semblable et injectée de façon toujours semblable, pendant une phase d'injection, dans un moule d'injection fermé contrôlé en température et est maintenue sous pression de façon toujours semblable, pendant un intervalle de temps ultérieur ($t_N$) , lors de la phase subséquente de maintien sous pression, un coussin de masse résiduelle résultant de la différence de position de la vis, obtenue à la fin de la phase de maintien sous pression et la position extrême de celle-ci ($1_1$ - $1_0$ ) étant maintenu à une valeur constante par commande automatique de la position de dosage, ledit coussin de masse résiduelle étant mesuré à la fin de la phase de maintien sous pression et maintenant sa valeur de consigne avec une précision suffisante par de petits pas de réglage moyennant une tolérance pour ledit coussin de moins de ±0,1 mm,

caractérisé en ce qu'on mémorise une course de vis (s) obtenue lors de l'optimisation sur une machine de moulage par injection (A), influencée par la masse moulée, le moule de moulage par injection et la courbe de vitesse de la vis, course de vis nécessaire pour l'obtention de caractéristiques physiques déterminées de la pièce moulée, et fonction du moule, en fonction du temps, comme courbe de consigne ($S_{EA}$ = f(t),$s_{EB}$ = f(t)), avec le temps d'injection rapporté au moule ($t_{EW}$ ),

en ce qu'on gradue la courbe de consigne ($s_{EA}$ = f(t),$s_{EB}$ = f(t)) de telle sorte que sa valeur finale est égale à 100 unités de longueur ($s_E$ = 100 mm) ou 100 %, en ce qu'on monte le moule de façon connue sur une autre machine de moulage par injection comportant entre aures un diamètre de vis différent,

en ce qu'on détermine et mémorise la nouvelle valeur finale de la course ($\overline{s_{EA}}$ ,$\overline{s_{EB}}$ ) de la vis (A, B) pour le même temps d'injection ($t_{EW}$ ), en ce qu'on calcule à partir des valeurs finales $\overline{(s_{EA})}$ et $\overline{(s_{EB})}$ ou $\overline{(s_{EB})}$ et $\overline{(s_E})$ un facteur d'adaptation des vis $K_s$ = $\overline{s_{EA}}$ : $\overline{s_E}$ ou Ks = $\overline{s_{EB}}$ : $\overline{s_E}$ et on le mémorise,

en ce qu'on reconstitue la courbe course-temps ( $s_{EA}$ = f(t), $s_{EB}$ = f(t)) point par point pour la vis (A, B) par multiplication des points correspondants de la courbe graduée mémorisée ($s_E$ = f(t)) par le facteur d'adaptation Ks et en ce que le mouvement de la vis suit de façon controlée cette courbe course-temps pour un temps d'injection ($t_{EW}$ ) toujours constant, et

en ce qu'on rajuste et mémorise la pression de maintient dans la tête de cylindre ($P_{NZ}$) obtenue lors de l'optimisation sur une première machine de moulage par injection,nécessaire pour l'obtention de dimensions déterminées de la pièce moulée ou bien la courbe de variation de la pression de maintien nécessaire, fonction du temps ou de la course, après montage du moule d'injection sur une deuxième machine avec une pression de maintien $P_{NZ}{}^{x}$, fonction du temps ou de la course, jusqu'à obtention des mêmes dimensions que celles obtenues lors de l'optimisation sur la première machine.

2. Procédé selon la revendication 1,

caractérisé en ce qu'on mémorise le travail d'injection obtenu lors du montage du moule d'injection sur une deuxième machine de moulage par injection ou sur une machine de moulage par injection ultérieure, pendant le temps d'injection ($t_{EW}$) rapporté au moule

$$W_{EW}{}^{x} = A_{Z} \int P_{EZ}.\, d\, s_{E} \qquad (1)$$

en ce qu'on calcule la pression de maintien ($P_{NZ}$) selon la relation mathématique

$$P_{NZ} = P_{NZ_{x}} \left( \frac{W_{EW}}{W_{EW}{}^{x}} \right)^{NK} \qquad (2)$$

avec les valeurs mémorisée pour $P_{NZ}{}^{x}$ et $W_{EM}{}^{x}$ et la valeur déterminée directement au préalable pour le travail d'injection ($W_{EW}$) et en ce qu'on exerce cette pression, le facteur pour la liaison de la pression de maintien étant posé à $NK = 1$,

en ce qu'on augmente ensuite la température de la masse ($\vartheta_{M}$) d'une valeur déterminée $\Delta\vartheta_{M}$

en ce qu'on détermine les variations des dimensions des pièces moulées apparues après plusieurs cycles d'injection,

en ce que, en fonction des variations dimensionelles par rapport aux valeurs de consigne, on augmente le facteur pour la liaison de la pression de maintien (NK) au-delà de 1,0 ou bien on le réduit en dessous de 1,0, jusqu'au moment où, après plusieurs cycles d'injection ultérieurs, les valeurs de consigne voulues pour les dimensions, plus particulièrement la valeur de consigne d'une dimension principale essentielle, sont atteintes, et

en ce qu 'on ramène la température de la masse ($\vartheta_{M}$) par réglage d'une valeur $\Delta\vartheta_{M}$ à la valeur d'origine et en ce qu'on libère la régulation du procédé pour la fabrication, après cette adaptation.

Fig. 1

Fig. 2

Fig. 3

Fig. 4

$$p_{NZ} = p_{NZ}^* \left( \frac{W_{EW}}{W_{EW}^*} \right)^{NK}$$

NK = 2,0

NK = 1,5

NK = 1,0

NK = 0,75

NK = 0,5

Fig. 5

tolerierter Schmelzindex-Bereich (Beispiel)

$\vartheta_M$-Sollwert

Fig. 6

MFI [g/10min]